# EUROPEAN PATENT SPECIFICATION

(11) **EP 1 741 153 B1**
(45) Date of publication and mention of the grant of the patent: **03.06.2009**
(21) Application number: 05734086.1
(22) Date of filing: 13.04.2005
(51) Int. Cl.: H01M 4/48, H01M 4/52, H01M 4/04

(54) **ELECTROCHEMICAL CELL**
ELEKTROCHEMISCHE ZELLE
PILE ELECTROCHIMIQUE

(30) Priority: 13.04.2004 GB 0408260
(43) Date of publication of application: 10.01.2007
(73) Proprietor: Nanotecture Ltd., Chilworth Science Park Southampton SO16 7NS (GB)
(72) Inventor: OWEN, John Robert, Southampton, Hampshire SO15 5AP (GB); BRACE, Karen Marie, Southampton SO16 4FH (GB)
(74) Representative: Tubby, David George
(86) International application number: PCT/GB2005/001420
(87) International publication number: WO 2005/101548

(56) References cited:
- EP-A- 1 207 572
- EP-A- 1 251 574
- WO-A-99/59218
- US-A1- 2003 017 104

## Description

The present invention relates to an aqueous electrochemical cell, which may be a battery or a supercapacitor or both, and which uses titanium dioxide or a lithium titanate as the negative electrode. In accordance with the present invention, the titanium dioxide or lithium titanate is preferably in the form of a mesoporous material having a periodic arrangement of substantially uniformly sized pores of cross-section of the order of 10⁻⁸ to 10⁻⁹ m.

The mesoporous materials used in the present invention are sometimes referred to as "nanoporous". However, since the prefix "nano" strictly means 10⁻⁹, and the pores in such materials may range in size from 10⁻⁸ to 10⁻⁹ m, it is better to refer to them, as we do here, as "mesoporous,".

Titanium dioxide is well known as a negative electrode for lithium-ion batteries in which it is combined with a highly oxidising positive electrode, such as LiₓCoO₂. A non-aqueous electrolyte is normally used because it is believed that the potential for lithium insertion into a TiO₂ negative electrode is outsize the stability of water, and therefore hydrogen evolution should occur before lithium ion insertion. The use of non-aqueous electrolytes has several disadvantages; limited power and safety are issues that attract competition from aqueous systems such as the nickel/metal hydride cells. The latter, however, involve expensive alloys for hydrogen storage. Furthermore, the cell potential is limited to about 1.4 V because of the low overpotentials for hydrogen evolution on these metals.

A nickel electrode for an alkaline storage battery is known from EP1251574, and is formed by applying a paste containing active material particles composed of nickel hydroxide to a conductive substrate and drying said paste, wherein a conductive layer consisting of sodium-containing cobalt oxide is formed on a surface of said active material particles, and titanium powder and / or titanium compound powder is added to the surface of said active material particles.

EP1207572 discloses high power and high kinetics electrodes for electrochemical devices employing non-aqueous organic electrolyte, solid polymer electrolyte or the like, based upon electrically active materials structured as discrete contacting mesoporous, microparticles with a bimodal pore radius distribution.

US 2003/017104 discloses a process for making lithium titanate of closely controlled particle size.

WO 99/59218 discloses a high power density and high capacity primary or secondary electrochemical generator in which at least one electrode is composed of an electrically active solid material, said electrode having a mesoporous texture forming a bicontinuous junction of large specific surface area with the electrolyte.

We have recently used the liquid crystal template deposition method to deposit a large variety of materials from silica, platinum; and some materials used in batteries such as tin, manganese dioxide and nickel /nickel oxide. The deposits are all characterised by a well-ordered mesoporosity with a periodic arrangement of pores between 2 and 20 nm apart. This so-called mesostructure gives many advantageous properties to the material. We have shown that mesostructured metallic conductors can provide a fast electron transport route to an enormous surface area, thus enhancing properties such as electrocatalysis and charge storage by many orders of magnitude compared with the bulk forms of the same material.

Our recent discovery that mesostructured nickel coated with nickel oxide could give unprecedented current densities in excess of 5 A cm⁻² as a positive electrode in an alkaline electrolyte was tempered only by the absence of a negative electrode with equally good performance. Palladium is too expensive for use in most electrochemical cells, and metals capable of hydrogen storage, such as ZrNi₂, are difficult to produce in mesostructured forms. Oxides, such as WO₃, and various manganese oxy-hydroxides can be produced in mesostructured forms, but their facile reduction results in cells with low potentials against the nickel oxide positive electrode. Titanium dioxide has hitherto been overlooked as a candidate negative electrode in aqueous electrolytes because of the proximity of its reduction potential to that of hydrogen evolution. Although it has been used, in conjunction with other oxides, as a dimensionally stable anode material for electrolysis in non-aqueous systems, the degree of reversible reduction/oxidation has been too low for consideration as a negative electrode in a battery. We have now surprisingly found that titanium dioxide, especially mesostructured titanium dioxide and forms of titanium dioxide having ratios of surface area to volume of the same order as mesoporous, titanium dioxide, can be repeatedly reduced and reoxidised in aqueous lithium hydroxide to a much greater degree than previously believed possible without significant hydrogen evolution, and that it may, therefore, be used as a negative electrode in aqueous alkaline batteries and other electrochemical cells.

It should be noted that the term "battery" is used herein in its common meaning of a device that converts the chemical energy contained in its active components directly into electrical energy by means of a redox (oxidation-reduction) reaction. The basic unit of a battery is an electrochemical cell, which will comprise at least a positive electrode, a negative electrode and an electrolyte, the whole contained within a casing. Other component, such as separators, may be included, as is well known in the art. A battery may consist of one or more such cells.

Thus, the present invention consists in an electrochemical cell comprising a cathode (positive electrode), an anode (negative electrode) and an electrolyte, wherein:
the anode comprises titanium dioxide or a lithium titanate; and
the electrolyte comprises an aqueous solution containing lithium and hydroxide ions.

The titanium dioxide or lithium titanate used as, or as part of, the anode, the negative electrode of the electrochemical cell of the present invention, is most preferably a mesoporous titanium dioxide or lithium titanate. Such a material has a large contiguous surface area relative to its volume, and ensures that relatively little, for example, no more than 50%, of the material of the anode is far, for example no more than 10 nm, from that surface. The material preferably has a periodic arrangement of substantially uniformly sized pores of cross-section of the order of 10⁻⁸ to 10⁻⁹ m. This may be prepared as described in EP 993 512 or US 6,203,925, and as described in more detail hereafter. However, it may also be a form of titanium dioxide or lithium titanate having a ratio of surface area to volume of the same order as mesoporous titanium dioxide or lithium titanate , for example very finely divided titanium dioxide or lithium titanate. The titanium dioxide or lithium titanate preferably has a ratio of surface area to volume of from 10 to 5000 m²/cm³, more preferably from 10 to 1000 m²/cm³, and most preferably from 100 to 1000 m²/cm³.

The electrochemical cell of the present invention may be constructed to function as a battery, as a supercapacitor or as a combined battery/supercapacitor.

The positive electrode, the cathode, of the electrochemical cell of the present invention is preferably formed of a mesoporous material. The material is preferably a metal, a metal oxide, a metal hydroxide, a metal oxy-hydroxide or a combination of any two or more of these. Examples of such metals include: nickel; alloys of nickel, including alloys with a transition metal, nickel/cobalt alloys and iron/nickel alloys; cobalt; platinum; palladium; and ruthenium, which may be, and preferably are, mesoporous. Examples of such oxides, hydroxides and oxy-hydroxides include those of: nickel; alloys of nickel, including alloys with a transition metal, nickel/cobalt alloys and iron/nickel alloys; cobalt; platinum; palladium; and ruthenium. Of these, we most prefer nickel and its oxides and hydroxides, most preferably mesoporous nickel and its oxides and hydroxides.

As is well known in the field, certain of these materials require "conditioning" before use. This may be achieved by putting the cell through several cycles of charging and discharging, as is conventional in the art. A typical material requiring such conditioning is nickel, which, as a result of the conditioning, will acquire a surface layer of an oxide of substantial thickness.

In particular, we prefer that the mesoporous structure of the positive electrode comprises nickel and an oxide, hydroxide or oxy-hydroxide of nickel selected from NiO, Ni(OH)₂ and NiOOH, said nickel oxide or hydroxide forming a surface layer over said nickel and extending over at least the pore surfaces, and the negative electrode comprises mesoporous titanium dioxide.

Thus, preferably the positive electrode and the negative electrode each comprise a mesoporous structure having a periodic arrangement of substantially uniformly sized pores of cross-section of the order of 10⁻⁸ to 10⁻⁹ m. The positive electrode, and the negative electrode if it is also mesoporous, consists of or consists substantially of the mesoporous structure or structures as defined.

By "mesoporous structure", "mesoporous material" and "mesoporous film" as referred to herein are meant structures, materials and films, respectively, that contain an arrangement of pores preferably with a substantially uniform pore size (diameter). In particular, such structures, materials and films preferably have no more than 50% of their material further than 10 nm from their surface. We also prefer that most of the pores should have a diameter in the range from 2 to 50, more preferably from 2 to 10, nanometres. Accordingly, the mesoporous structures, materials and films may also be described as nanostructured or having nanoarchitecture. Preferred structures are those that have been fabricated via a liquid crystal templating process, and that consequently are monolithic in nature, and contain a long range, regular arrangement of pores having a defined topology and a substantially uniform pore size (diameter), preferably between 2 and 10 nm. The term "mesoporous" applies to all such structures irrespective of the method of synthesis and therefore includes 'nanomaterials' that are composed of aggregated nanoparticulates, provided that the particles are connected or fused together, e.g. by partial sintering, to such an extent that interparticle electron transfer is facile.

Therefore, the mesoporous materials used in accordance with the invention are distinct from poorly crystallised materials and from composites with discrete nano-sized solid grains, e.g. conventionally denoted 'nanomaterials' that are composed of aggregated nanoparticulates.

An advantage of using mesoporous materials, compared with nanomaterials, is that electron transport within the mesoporous material does not encounter grain boundary resistances, affording superior electronic conductivity and removing power losses associated with this phenomenon. Moreover, the ordered porosity of the mesoporous materials used here provides a continuous and relatively straight, non-tortuous path of flow with uniform diameter, encouraging the rapid and unhindered movement of electrolyte species. By contrast, conventional nanoparticulate systems have a disordered porosity with voids of varying cross section interconnected by narrower intervoid spaces. As such, substances moving within the pore structure encounter a considerably tortuous path, impeding reaction rates.

The mesoporous material is preferably in the form of a film of substantially constant thickness. Preferably, the mesoporous film thickness is in the range from 0.5 to 5 micrometers.

Preferably, the mesoporous material has a pore diameter within the range from about 1 to 10 nanometres, more preferably within the range from 2.0 to 8.0 nm.

The mesoporous material may exhibit pore number densities in the range from 1x10¹⁰ to 1x10¹⁴ pores per cm², preferably from 4x10¹¹ to 3x10¹³ pores per cm², and more preferably from 1x10¹² to 1x10¹³ pores per cm².

The mesoporous material has pores of substantially uniform size. By "substantially uniform" is meant that at least 75%, for example 80% to 95%, of pores have pore diameters to within 30%, preferably within 10%, and most preferably within 5%, of average pore diameter. More preferably, at least 85%, for example 90% to 95%, of pores have pore diameters to within 30%, preferably within 10%, and most preferably within 5%, of average pore diameter.

The pores are preferably cylindrical in cross-section, and preferably are present or extend throughout the mesoporous material.

The mesoporous structure preferably has a periodic arrangement of pores having a defined, recognisable topology or architecture, for example cubic, lamellar, oblique, centred rectangular, body-centred orthorhombic, body-centred tetragonal, rhombohedral, hexagonal. More preferably, the mesoporous structure has a periodic pore arrangement that is hexagonal, in which the electrode is perforated by a hexagonally oriented array of pores that are of uniform diameter and continuous through the thickness of the electrode.

In the preferred case where the pore arrangement is cubic or hexagonal, the arrangement of pores has a regular pore periodicity, corresponding to a centre-to-centre pore spacing, preferably in the range from 3 to 15 nm, more preferably in the range from 5 to 9 nm. In an alternative preferred embodiment, the pore spacing is preferably in the range from 10 to 20 nm, more preferably from 12 to 17 nm.

Moreover, the mesoporous structure having this regular periodicity and substantially uniform pore size should extend over a portion of the electrode of the order of at least 10 times, preferably at least 100 times, the average pore size. Preferably, the electrode consists of or consists substantially of a structure or structures as defined.

It will be appreciated that these pore topologies are not restricted to ideal mathematical topologies, but may include distortions or other modifications of these topologies, provided recognisable architecture or topological order is present in the spatial arrangement of the pores in the film. Thus, term "hexagonal" as used herein encompasses not only materials that exhibit mathematically perfect hexagonal symmetry within the limits of experimental measurement, but also those with significant observable deviations from the ideal state, provided that most channels are surrounded by an average of six nearest-neighbour channels at substantially the same distance. Similarly, the term "cubic" as used herein encompasses not only materials that exhibit mathematically perfect symmetry belonging to cubic space groups within the limits of experimental measurement, but also those with significant observable deviations from the ideal state, provided that most channels are connected to between two and six other channels.

The performance of the TiO₂ or lithium titanate may be modified or enhanced by doping with another metal, adding to or substituting for Ti in the structure. Examples of such metals are the transition metals, preferably the first period transition metals V, Cr, Mn, Fe, Co, Ni or Cu, and most preferably vanadium. The oxygen content may be reduced such that the metal or metals are not in their maximum oxidation state before reduction.

The mesoporous material, based on TiO₂ or lithium titanate, may have a nonperiodic pore structure with a surface area above 10 m² per cm², and preferably above 100 m² per cm². Examples of such materials are nanoparticulate TiO₂ or lithium titanate and nanotubes of TiO₂ or lithium titanate. Additives, such as nanostructured carbon or carbon blacks may be added to increase the electronic conductivity of the electrode. Binders, inert materials used to hold particles together in a solid structure, may be added as in the common practice of the battery industry.

In place of, or in addition to, the titanium dioxide, the anode may contain a lithium titanate, preferably Li₄Ti₅O₁₂.

The mesoporous material may be prepared as described in EP 993 512 or US 6,203,925, which produces an essentially monolithic film. If desired, this film or layer of mesoporous material may be comminuted to produce a particulate, but still mesoporous, material.

As noted above, instead of a mesoporous material, other materials having a similar surface area to volume ratio may be used, for example the known materials referred to herein as "nanoparticulate".

The electrolyte employed in the electrochemical cell of the present invention is an aqueous solution containing lithium and hydroxide ions, which may be aqueous lithium hydroxide. The concentration of lithium hydroxide in the solution may vary over a wide range, as is well known in the art for analogous materials (for example potassium hydroxide, as commonly used in alkaline batteries). However, for best results, a concentration of from 0.1 M to the saturation limit, more preferably from 0.5M to the saturation limit, is preferred. Another hydroxide salt may be added to the electrolyte to increase the conductivity and other salts may have beneficial effects. Sodium hydroxide, potassium hydroxide or both may be included at concentrations between 0.1M and the saturation limit, and preferably between 1M and the saturation limit.

Where another hydroxide, such as sodium hydroxide or potassium hydroxide, provides the hydroxide ions, the lithium may be provided in the form of a salt other than the hydroxide. Examples of such salts include: inorganic lithium salts, such as lithium sulphate, lithium perchlorate or lithium hexafluorophosphate; lithium sulphonates, such as lithium trifluoromethanesulphonate; and lithium carboxylates, such as lithium acetate.

If desired the electrolyte may include other compounds to improve the efficiency of the cell or for other purposes, as is well known in the art. For example, if it is desired to reduce water activity in order to suppress hydrogen evolution, another compound may be added to achieve this. Such a compound should be miscible with water and should be stable to oxidation at the positive electrode and stable to reduction at the negative electrode. That is, these solvents must be stable over the voltage range over which the cell operates. Examples of compounds added to reduce water activity include: tertiary alcohols, such as t-butyl alcohol; ethers, such as dimethoxyethane, tetrahydrofuran or 1,4 dioxane; and tertiary amines, such as triethylamine.

In a preferred embodiment, the mesoporous structure of the nickel cathode comprises nickel and an oxide, hydroxide or oxy-hydroxide of nickel selected from nickel oxide (NiO), nickel hydroxide (Ni(OH)₂) and nickel oxy-hydroxide (NiOOH), said nickel oxide, hydroxide or oxy-hydroxide forming a surface layer over said nickel and extending over at least the pore surfaces, and the anode has a mesoporous structure of titanium dioxide or a lithium titanate. When filled with electrolyte, the positive electrode represents a three-phase composite composed of an interconnected Ni current collector base, coated with Ni(OH)₂ active material which is in contact with the electrolyte. Advantageously, the hydrous structure of the mesoporous Ni positive electrode is retained such that both surface and bulk processes can contribute to the charge capacity of the electrode. Due to the nanoscale structure of the electrode, all three phases are in either in intimate contact or within about 1-2 nm of each other and the overall surface area of the 'phase boundaries' is extremely high. Hence, a high energy density can be achieved, whilst the small proton diffusion distance enables the cell to exhibit very high power density.

As is well known in the field, nickel requires "conditioning" before use. This may be achieved by putting the cell through several cycles of charging and discharging, as is conventional in the art. As a result of the conditioning, the nickel will acquire a surface layer of an oxide.

The mesoporous materials preferably used as the positive and the negative electrodes of the electrochemical cells of the present invention are prepared by a liquid crystal templating method, and preferably are deposited as films on a substrate by electrochemical deposition from a lyotropic liquid crystalline phase. They may also be prepared by electro-less deposition, such as by chemical reduction from a lyotropic liquid crystalline phase.

Suitable substrates include gold, copper, silver, aluminium, nickel, rhodium or cobalt, or an alloy containing any of these metals, or phosphorus. The substrate may, if desired, be microporous, with pores of a size preferably in the range from 1 to 20 micrometers. The substrate preferably has a thickness in the range from 2 to 50 micrometers. The substrate preferably is a substrate as above, other than gold, having a layer of gold formed on it by vapour deposition.

Suitable methods for depositing mesoporous materials as films onto a substrate by electrochemical deposition and chemical means are known in the art. For example, suitable electrochemical deposition methods are disclosed in EP-A-993,512; Nelson, et al., "Mesoporous Nickel/Nickel Oxide Electrodes for High Power Applications ", J. New Mat. Electrochem. Systems, 5, 63-65 (2002); Nelson, et al., "Mesoporous Nickel/Nickel Oxide - a Nanoarchitectured Electrode ", Chem. Mater., 2002,14, 524-529. Suitable chemical reduction methods are disclosed in US-A-6,203,925.

Preferably, the mesoporous material is formed by electrochemical deposition from a lyotropic liquid crystalline phase. According to a general method, a template is formed by self-assembly from certain long-chain surfactants and water into a desired liquid crystal phase, such as a hexagonal phase. Suitable surfactants include octaethylene glycol monohexadecyl ether (C₁₆EO₈), which has a long hydrophobic hydrocarbon tail attached to a hydrophilic oligoether head group. Others include the polydisperse surfactants Brij^{®}56 (C₁₆EOₙ where n~10), Brij^{®}78 (C₁₆EOₙ where n~20), and Pluronic 123, each available from Aldrich. At high (>30%) aqueous concentrations, and dependent on the concentration and temperature used, the aqueous solution can be stabilised in a desired lyotropic liquid crystal phase, for example a hexagonal phase, consisting of separate hydrophilic and hydrophobic domains, with the aqueous solution being confined to the hydrophilic domain. Dissolved inorganic salts, for example nickel acetate, will also be confined to the hydrophilic domain, and may be electro-reduced at an electrode immersed in the solution, to form a solid mesophase, for example of nickel metal, that is a direct cast of the aqueous domain phase structure. Subsequent removal of the surfactant, by washing in a suitable solvent, leaves a regular periodic array of pores in the electro-reduced solid, the arrangement of the pores being determined by the lyotropic liquid crystal phase selected. The topology, size, periodicity and other pore characteristics may be varied by appropriate selection of the surfactant, solvent, metal salts, hydrophobic additives, concentrations, temperature, and deposition conditions, as is known in the art.

Mesoporous titanium dioxide or lithium titanates may be prepared using similar surfactants to those suggested above and in a similar way. In this case the surfactant is preferably one that gives a cubic liquid crystalline phase chosen to impart to the resulting mesoporous structure a large internal surface area in contact with a well-connected pore system. For this reason, Pluronic F127 is preferred over Pluronic 123. The reaction to form the titanium dioxide may be any known in the art, for example the acid hydrolysis of a titanium alkoxide, such as titanium ethoxide. A dopant, such as a vanadium salt, especially a vanadyl chloride, such as VOCl₃, may, if desired, be included in the solution from which the titanium dioxide is deposited, in order to raise the reduction potential.

As noted above, the mesoporous material of which the mesoporous electrode is made is preferably formed by electrodeposition or chemical deposition on a substrate. Since the mesoporous material may lack adequate mechanical strength, it is preferably used as an electrode on a substrate, and, for convenience, this is preferably the same substrate as was used in its preparation.

As is common in the art, a current collector is preferably used to conduct current to or from the electrodes. This current collector should be, as is known in the art, essentially inert under the conditions in the electrochemical cell, and in particular, it is preferably a poor catalyst for hydrogen evolution. Examples of materials which may be used as current collectors include: carbon in various forms, such as vitreous carbon, carbon black or graphite; metals, such as titanium or tantalum; tin oxide doped with indium or fluorine; and reduced titanium oxide, TiO₂₋ₓ. The current collector may be connected to the relevant electrode by any conventional means.

The invention is further illustrated by the following non-limiting Example, with reference to the Figures, in which:
Figure 1 shows cyclic voltammograms of (a) a mesoporous titanium dioxide film (4-dip, cubic), (b) a mesoporous titanium dioxide film (single dip, cubic) and (c) a non-templated titanium dioxide film between -0.5 V and -1.8 V vs. Hg/HgO at 20 mV s⁻¹ in de-oxygenated 1 M aqueous lithium hydroxide at 25 C;
Figure 2 shows cyclic voltammograms of a mesoporous titanium dioxide film (hexagonal, single dip) in (a) 1 M aqueous lithium hydroxide and (b) 1 M aqueous potassium hydroxide between -0.5 V and -1.8 V vs. Hg/HgO at 20 mV s⁻¹ at 25°C;
Figure 3 shows the potential step charge/discharge cycle of a mesoporous titanium dioxide film (cubic, 4-dip); the film was charged for 6 s at -1.8 V vs. Hg/HgO and discharged for 6 s at -0.5 V vs. Hg/HgO in de-oxygenated 1 M aqueous lithium hydroxide at 25°C; and
Figure 4 shows current-time response mesoporous Ni, Ni(OH)₂ / mesoporous TiO₂ (4-dip, cubic) films in 2 electrode set-up pulsed between 0 V and 2.0 V in de-oxygenated 1 M aqueous lithium hydroxide at 25°C. The dotted line shows the potential steps applied.

### EXAMPLE

### Preparation of a nanostructured nickel/titanium (IV) oxide supercapacitor.

### (i) Preparation of nickel/nickel hydroxide substrates:

For the mesoporous nickel films, nickel foil (10 µm thick, 4 cm²) was obtained from Goodfellows and was cleaned in an ultrasound bath of isopropanol for 15 minutes prior to deposition. It was then rinsed in de-ionised water and dried under ambient conditions.

### (ii) Electrodeposition of nickel from an hexagonal liquid crystalline phase:

A mixture having normal topology hexagonal (H_{I}) phase was prepared from 45 wt% of an aqueous solution of 0.2 M nickel (II) acetate, 0.5 M sodium acetate and 0.2 M boric acid, and 55 wt% of Brij^{®} 56 non-ionic surfactant (C₁₆EOₙ wherein n~10, from Aldrich), and electrodeposition onto the nickel foil substrate was carried out potentiostatically at -0.9 V vs. a saturated calomel electrode and at 25°C using a platinum gauze counterelectrode, according to the method disclosed in Nelson et al., Chem. Mater., 2002, 14, 524-529. The total deposition charge was 2.0 C. After deposition, the films were washed in copious amounts of isopropanol for 24 hours to remove the surfactant.

### (iii) Preparation of titanium (IV) oxide substrates:

For the mesoporous titanium dioxide films, glass slides coated with fluorine-doped tin oxide (FTO) (textured, 2.5 x 3.5 x 0.1 cm³) were obtained from Asahi, cleaned in Teepol^{®}, then rinsed in copious amounts of acetone and de-ionised water and dried under ambient conditions prior to deposition.

### (iv) Chemical deposition of titanium (IV) oxide from a cubic liquid crystalline, phase:

A solution of Pluronic P123 (for hexagonal phase templated) or Pluronic F127 (for cubic phase templated) (2 g), methanol (15 g), concentrated hydrochloric acid (2 g), titanium (IV) ethoxide (3-4.5 g) was used to dip-coat the FTO/glass slides at a dip rate of 0.5 cm s⁻¹. Samples were aged at 45°C for 24 hours, heated to 400°C under N₂ and then calcined under O₂ for 2 hours to remove the surfactant. The final thickness of the cubic and hexagonal single dip TiO₂ films was typically 0.5 µm. Non-templated control samples were also prepared using the same procedure but in the absence of any surfactant.

Cubic multiple layered samples were deposited by repeatedly dip coating in the same solution as above but with 30 seconds between dips These samples were then aged at 45°C for 24 hours, heated to 190°C in air and left for 2 hours. The samples were then dipped into a solution containing 15 g MeOH, 0.3 g concentrated HCl, and 0.3 g Ti(OEt)₄, after which the samples were aged at 45°C for 24 hours, then calcined in air to remove the surfactant (heated to 360°C) and left for 2 hours. The final thickness of the cubic 4-dip TiO₂ films was measured by scanning electron microscopy and was typically 1.3 µm. Transmission electron microscopy of fragments taken from the film showed the nanostructure as a cubic array of 10 nm pores with a repeat distance of 15 nm.

### (v) Examination of the titanium (IV) oxide electrode:

For electrochemical studies, electrical contact was made to some exposed FTO at the edge of the TiO₂-coated slide and polyimide tape used to mask an area of the TiO₂ film approximately 1 cm². The cell also consisted of de-oxygenated 1 M aqueous lithium hydroxide electrolyte, a nickel mesh counterelectrode and potentials are versus a Hg/HgO reference electrode. Data were collected using a Solartron 1286 Electrochemical Interface and Corrware software.

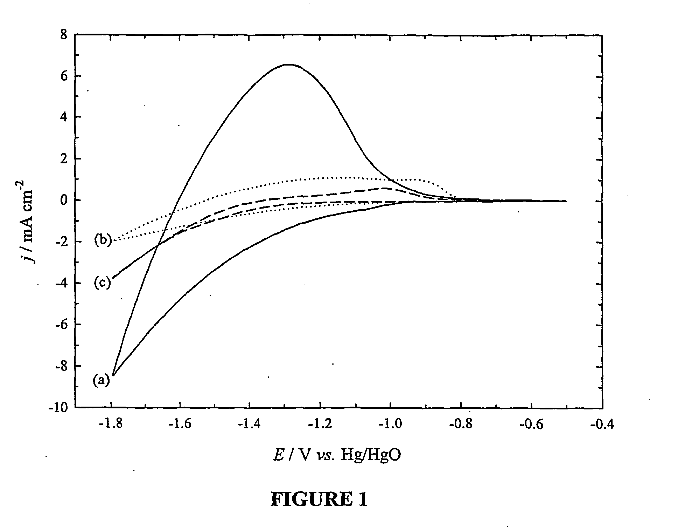

In Figure 1, the cyclic voltammograms of the mesoporous TiO₂ film and control (non-templated) sample show a large increase in cathodic current at potentials below -1.0 V vs. Hg/HgO. More importantly, on reversal of the scan, the mesoporous film gives an anodic peak demonstrating reversibility of the reaction. Integration of the mesoporous TiO₂ voltammogram showed 127 mC cm⁻² and 29.1 mC cm⁻² reversible charge for the 4-dip and single dip cubic mesoporous films respectively compared to less than 1 mC cm⁻² for the non-templated sample. The charge storage efficiency was 81 % for the 4-dip templated sample and 75% for the single dip templated sample, as compared with less than 1% for the control sample.

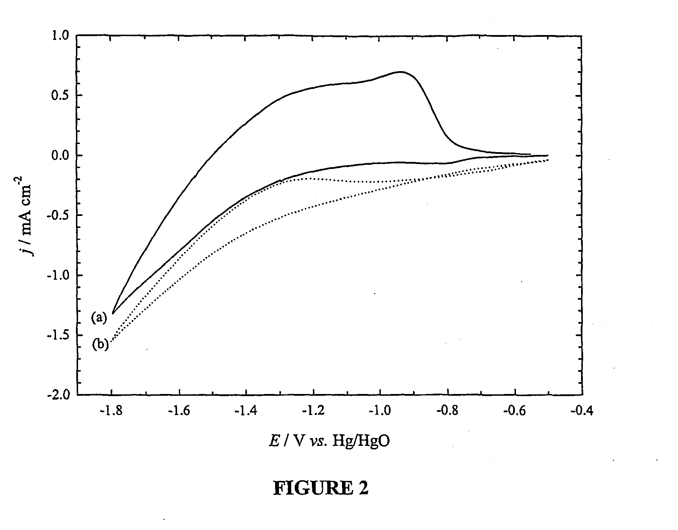

Cation insertion was confirmed by electrochromic behaviour of the titanium dioxide electrode giving a deep blue colouration in the charged state for the mesoporous film and a lesser colouration of the non-templated sample. Similar electrochromic activity is well known during the reduction of TiO₂ in non-aqueous lithium electrolytes. Experiments analogous to those shown in Figure 1, using TiO₂ films templated from a hexagonal phase liquid crystal deposition composition in both 1 M LiOH (aqueous) and 1 M KOH (aqueous) electrolyte are shown in Figure 2. These samples gave only small amounts of reversible charge (<5 mC cm⁻²) and a weak colour change in KOH solution compared to LiOH (17.2 mC cm⁻²), suggesting that lithium ions are more easily inserted into the TiO₂ structure.

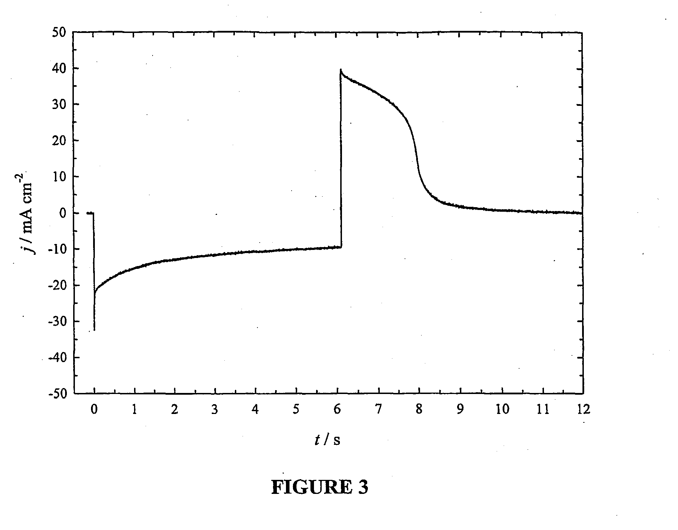

The mesoporous form of the electrode suggests that electrode discharge can be very rapid. Figure 3 shows the result of a potential step charge/discharge experiment performed on a 4-dip cubic TiO₂ sample, in which the current is greater than 40 mA cm⁻², and 65 mC cm⁻² is released in 3 seconds (equivalent to 86% charge storage efficiency). This result is most significant when we realise that it is for a macroscopically planar electrode surface, so that much larger current densities can be expected for electrodes in which the same film thickness is distributed over a microscopically roughened current collector as in modem battery electrodes. Taking into account the actual electrode thickness of 1.3 µm, we can calculate an expected current density of 5 Acm⁻² for a typical battery electrode thickness of 130 µm.

### (vi) Assembly and testing of charge/discharge characteristics of the supercapacitor:

The superiority of mesoporous titanium dioxide over other negative electrode materials for use in alkaline solution is demonstrated by the charge/discharge potential steps of the following cell:

### mesoporous TiO₂| LiOH (aq, 1M)| mesoporous Ni/Ni(OH)₂

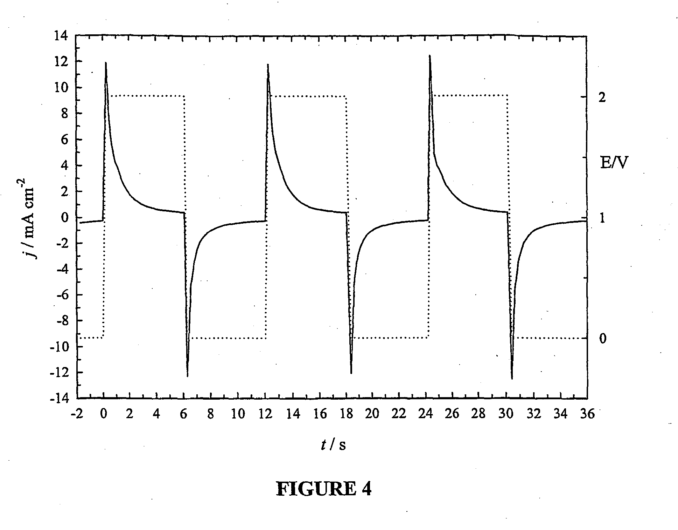

Each electrode in the cell was pre-charged for 60 seconds, TiO₂ (4-dip, cubic) at -1.6V vs.Hg/HgO and Ni at 0.65 V vs. Hg/HgO. Once connected in the 2 electrode set-up the open circuit voltage was measured as 2.03 V. This is much higher than the voltage obtained in the Nickel Oxide/Metal Hydride system, where hydrogen evolution occurs above 1.4 V because of the electrocatalytic nature of the metal compared to titanium dioxide. Figure 4 shows the current transients respectively as the cell is pulsed between 0.0 V and 2.0 V. The average charge is -11.9 mC cm⁻² and discharge 9.0 mC cm⁻², giving a charge storage efficiency of 76%. Discharge is 86% complete within 3 seconds.

## Claims

1. An electrochemical cell comprising a cathode, an anode and an electrolyte, wherein:
the anode comprises titanium dioxide or a lithium titanate; and
the electrolyte comprises an aqueous solution containing lithium and hydroxide ions.

2. A cell according to Claim 1, in which the titanium dioxide or lithium titanate is mesoporous.

3. A cell according to Claim 2, in which the mesoporous titanium dioxide or lithium titanate has a periodic arrangement of substantially uniformly sized pores of cross-section of the order of 10⁻⁸ to 10⁻⁹ m.

4. A cell according to any one of the preceding Claims, in which the positive electrode is formed of a mesoporous material.

5. A cell according to Claim 4, in which the mesoporous material is a metal, a metal oxide, a metal hydroxide, a metal oxy-hydroxide or a combination of any two or more of these.

6. A cell according to Claim 4 or Claim 5, in which the mesoporous material comprises a metal selected from: nickel; alloys of nickel, nickel/cobalt alloys and iron/nickel alloys.

7. A cell according to Claim 6, in which the metal is nickel.

8. A cell according to one of Claims 2 to 7, in which the mesoporous structure of the positive and/or negative electrode has a pore diameter within the range from 1 to 10 nm, preferably from 2.0 to 8.0 nm.

9. A cell according to any one of Claims 2 to 8, in which the mesoporous structure of the positive and/or negative electrode has a pore number density of from 4x10¹¹ to 3x10¹³ pores per cm², preferably from 1x10¹² to 1x10¹³ pores per cm².

10. A cell according to any one of Claims 2 to 9, in which at least 85 % of the pores in the mesoporous structure of the positive and/or negative electrode have pore diameters to within 30 %, preferably within 10%, more preferably within 5 %, of the average pore diameter.

11. A cell according to any one of Claims 2 to 10, in which the mesoporous structure of the positive and/or negative electrode has a hexagonal arrangement of pores that are continuous through the thickness of the electrode.

12. A cell according to Claim 11, in which the hexagonal arrangement of pores has a pore periodicity of in the range from 5 to 9 nm.

13. A cell according to any preceding Claim, in which the mesoporous structure of the positive and/or negative electrode is a film having a thickness in the range from 0.5 to 5 micrometers.

14. A cell according to any one of Claims 2 to 10, in which the mesoporous structure of the positive and/or negative electrode has a cubic arrangement of pores that are continuous through the thickness of the electrode.

15. A cell according to Claim 1, in which the titanium dioxide or lithium titanate is nanoparticulate

16. A cell according to any one of the preceding Claims, in which the anode comprises titanium dioxide.

17. A cell according to any one of the preceding Claims, in which the anode comprises a lithium titanate.

18. A cell according to Claim 17, in which the lithium titanate is Li₄Ti₅O₁₂.

19. A cell according to any one of the preceding Claims, in which the electrolyte comprises an aqueous solution of lithium hydroxide..

20. A cell according to any preceding Claim, which is a battery.

21. A cell according to any one of Claims 1 to 19, which is a supercapacitor.

## Patentansprüche

1. Elektrochemische Zelle, die eine Kathode, eine Anode und einen Elektrolyt aufweist, wobei:
die Anode Titandioxid oder ein Lithiumtitanat aufweist; und
der Elektrolyt eine wäßrige Lösung aufweist, die Lithium- und Hydroxidionen enthält.

2. Zelle nach Anspruch 1, wobei das Titandioxid oder das Lithiumtitanat mesoporös ist.

3. Zelle nach Anspruch 2, wobei das mesoporöse Titandioxid oder Lithiumtitanat eine periodische Anordnung von Poren mit im wesentlichen einheitlicher Größe und einem Querschnitt in der Größenordnung von 10⁻⁸ bis 10⁻⁹ m aufweist.

4. Zelle nach einem der vorstehenden Ansprüche, wobei die positive Elektrode aus einem mesoporösen Material gebildet wird.

5. Zelle nach Anspruch 4, wobei das mesoporöse Material ein Metall, ein Metalloxid, ein Metallhydroxid, ein Metalloxyhydroxid oder eine Kombination von zwei oder mehreren davon ist.

6. Zelle nach Anspruch 4 oder Anspruch 5, wobei das mesoporöse Material ein Metall aufweist, das unter den folgenden ausgewählt ist: Nickel, Nickellegierungen, Nickel/Cobalt-Legierungen und Eisen/Nickel-Legierungen.

7. Zelle nach Anspruch 6, wobei das Metall Nickel ist.

8. Zelle nach einem der Ansprüche 2 bis 7, wobei die mesoporöse Struktur der positiven und/oder negativen Elektrode einen Porendurchmesser im Bereich von 1 bis 10 nm, vorzugsweise von 2,0 bis 8,0 nm aufweist.

9. Zelle nach einem der Ansprüche 2 bis 8, wobei die mesoporöse Struktur der positiven und/oder negativen Elektrode eine Porenzahldichte von 4 × 10¹¹ bis 3 × 10¹³ Poren pro cm², vorzugsweise von 1 × 10¹² bis 1 × 10¹³ Poren pro cm² aufweist.

10. Zelle nach einem der Ansprüche 2 bis 9, wobei mindestens 85% der Poren in der mesoporösen Struktur der positiven und/oder negativen Elektrode Porendurchmesser innerhalb von 30%, vorzugsweise innerhalb von 10%, stärker bevorzugt innerhalb von 5% um den mittleren Porendurchmesser aufweisen.

11. Zelle nach einem der Ansprüche 2 bis 10, wobei die mesoporöse Struktur der positiven und/oder negativen Elektrode eine hexagonale Anordnung von Poren aufweist, die durch die Dicke der Elektrode hindurch kontinuierlich sind.

12. Zelle nach Anspruch 11, wobei die hexagonale Porenanordnung eine Porenperiodizität im Bereich von 5 bis 9 nm aufweist.

13. Zelle nach einem der vorstehenden Ansprüche, wobei die mesoporöse Struktur der positiven und/oder negativen Elektrode eine Schicht mit einer Dicke im Bereich von 0,5 bis 5 µm ist.

14. Zelle nach einem der Ansprüche 2 bis 10, wobei die mesoporöse Struktur der positiven und/oder negativen Elektrode eine kubische Anordnung von Poren aufweist, die durch die Dicke der Elektrode hindurch kontinuierlich sind.

15. Zelle nach Anspruch 11, wobei das Titandioxid oder Lithiumtitanat nanopartikulär ist.

16. Zelle nach einem der vorstehenden Ansprüche, wobei die Anode Titandioxid aufweist.

17. Zelle nach einem der vorstehenden Ansprüche, wobei die Anode Lithiumtitanat aufweist.

18. Zelle nach Anspruch 17, wobei das Lithiumtitanat Li₄Ti₅O₁₂ ist.

19. Zelle nach einem der vorstehenden Ansprüche, wobei der Elektrolyt eine wäßrige Lithiumhydroxidlösung aufweist.

20. Zelle nach einem der vorstehenden Ansprüche, die eine Batterie ist.

21. Zelle nach einem der Ansprüche 1 bis 19, die ein Superkondensator ist.

## Revendications

1. Pile électrochimique comprenant une cathode, une anode et un électrolyte, dans laquelle:
l'anode comprend du dioxyde de titane ou un titanate de lithium; et
l'électrolyte comprend une solution aqueuse contenant des ions lithium et hydroxyde.

2. Pile selon la revendication 1, dans laquelle le dioxyde de titane ou le titanate de lithium est mésoporeux.

3. Pile selon la revendication 2, dans laquelle le dioxyde de titane ou le titanate de lithium mésoporeux possède un arrangement périodique de pores substantiellement uniformément dimensionnés d'une section transversale de l'ordre de 10⁻⁸ à 10⁻⁹ m.

4. Pile selon l'une quelconque des revendications précédentes, dans laquelle l'électrode positive est formée d'un matériau mésoporeux.

5. Pile selon la revendication 4, dans laquelle le matériau mésoporeux est un métal, un oxyde métallique, un hydroxyde métallique, un oxy-hydroxyde métallique ou une combinaison de deux quelconques ou plus de ceux-ci.

6. Pile selon la revendication 4 ou la revendication 5, dans laquelle le matériau mésoporeux comprend un métal choisi parmi: le nickel, des alliages de nickel, des alliages de nickel/cobalt et des alliages de fer/nickel.

7. Pile selon la revendication 6, dans laquelle le métal est le nickel.

8. Pile selon l'une des revendications 2 à 7, dans laquelle la structure mésoporeuse de l'électrode positive et/ou négative présente un diamètre de pores dans l'intervalle de 1 à 10 nm, de préférence de 2,0 à 8,0 nm.

9. Pile selon l'une quelconque des revendications 2 à 8, dans laquelle la structure mésoporeuse de l'électrode positive et/ou négative présente une densité de nombre de pores de 4 x 10" à 3 x 10¹³ pores par cm², de préférence de 1 x 10¹² à 1 x 10¹³ pores par cm².

10. Pile selon l'une quelconque des revendications 2 à 9, dans laquelle au moins 85% des pores dans la structure mésoporeuse de l'électrode positive et/ou négative possèdent des diamètres de pores dans les 30%, de préférence dans les 10%, plus préférablement dans les 5%, du diamètre de pores moyen.

11. Pile selon l'une quelconque des revendications 2 à 10, dans laquelle la structure mésoporeuse de l'électrode positive et/ou négative possède un arrangement hexagonal de pores qui sont continus à travers l'épaisseur de l'électrode.

12. Pile selon la revendication 11, dans laquelle l'arrangement hexagonal de pores possède une périodicité de pores dans l'intervalle de 5 à 9 nm.

13. Pile selon l'une quelconque des revendications précédentes, dans laquelle la structure mésoporeuse de l'électrode positive et/ou négative est un film possédant une épaisseur dans l'intervalle de 0,5 à 5 micromètres.

14. Pile selon l'une quelconque des revendications 2 à 10, dans laquelle la structure mésoporeuse de l'électrode positive et/ou négative possède un arrangement cubique de pores qui sont continus à travers l'épaisseur de l'électrode.

15. Pile selon la revendication 1, dans laquelle le dioxyde de titane ou le titanate de lithium est nanoparticulaire.

16. Pile selon l'une quelconque des revendications précédentes, dans laquelle l'anode comprend du dioxyde de titane.

17. Pile selon l'une quelconque des revendications précédentes, dans laquelle l'anode comprend un titanate de lithium.

18. Pile selon la revendication 17, dans laquelle le titanate de lithium est Li₄Ti₅O₁₂.

19. Pile selon l'une quelconque des revendications précédentes, dans laquelle l'électrolyte comprend une solution aqueuse d'hydroxyde de lithium.

20. Pile selon l'une quelconque des revendications précédentes, qui est une batterie.

21. Pile selon l'une quelconque des revendications 1 à 19, dans laquelle qui est un super-condensateur.
